Europäisches Patentamt

(19) European Patent Office   (11) Publication number:   **0 290 394**
**B1**
Office européen des brevets

(12)                    **EUROPEAN PATENT SPECIFICATION**

<table>
<tr><td>(45) Date of publication of the patent specification:<br>**31.10.90**</td><td>(51) Int. Cl.⁵: **C04B 28/04,** C04B 7/51<br>// (C04B28/04, 24:06,<br>24:22),(C04B28/04, 24:10,<br>24:22),(C04B28/04, 24:18, 24:22)</td></tr>
<tr><td>(21) Application number: **88810279.5**</td><td></td></tr>
<tr><td>(22) Date of filing: **03.05.88**</td><td></td></tr>
</table>

(54) Improved hyraulic cement.

<table>
<tr><td>(30) Priority: **05.05.87  GB 8710605**</td><td>(73) Proprietor: **SANDOZ AG, Lichtstrasse 35,<br>CH-4002 Basel(CH)**</td></tr>
<tr><td></td><td>(84) Designated Contracting States: **BE CH ES FR GB IT LI NL<br>SE**</td></tr>
<tr><td>(43) Date of publication of application:<br>**09.11.88 Bulletin 88/45**</td><td></td></tr>
<tr><td></td><td>(73) Proprietor: **SANDOZ-PATENT-GMBH,<br>Humboldtstrasse 3, D-7850 Lörrach(DE)**</td></tr>
<tr><td>(45) Publication of the grant of the patent:<br>**31.10.90 Bulletin 90/44**</td><td>(84) Designated Contracting States: **DE**</td></tr>
<tr><td>(84) Designated Contracting States:<br>**AT BE CH DE ES FR GB IT LI NL SE**</td><td>(73) Proprietor: **SANDOZ-ERFINDUNGEN<br>Verwaltungsgesellschaft m.b.H., Brunner Strasse 59,<br>A-1235 Wien(AT)**</td></tr>
<tr><td></td><td>(84) Designated Contracting States: **AT**</td></tr>
<tr><td>(56) References cited:<br>**WO-A-87/02978<br>FR-A- 506 378<br>FR-A- 1 599 676<br>FR-A- 2 396 634<br>NL-A- 7 805 335<br>US-A- 2 141 571<br>US-A- 4 088 808<br>US-A- 4 623 682**<br><br>**CHEMICAL ABSTRACTS, vol. 92, no. 16, April 1980,<br>page 337, no. 134168u, Columbus, Ohio, US; &<br>JP-A-79 130 496 (TAKEMOTO OIL AND FAT<br>CO.) 09-10-1979**</td><td>(72) Inventor: **Biagini, Stefano, Via Casa di Ricovero 29,<br>I-31100 Treviso(IT)**<br>Inventor: **Collepardi, Mario, Viale Felissent 50,<br>I-31050 Treviso(IT)**</td></tr>
</table>

**Description**

This invention relates to cementitious mixes containing fluidifying agents, that is, plasticizing or superplasticizing agents.

Plasticizing or superplasticizing agents are chemical additives which are advantageously used in a mortar or concrete in order to increase the fluidity of the fresh cement mix with the same water/cement ratio and so to improve the workability of the mix and its ease of placing. Alternatively the same additives can be used as water reducers to allow the same degree of workability to be maintained while the water/cement ratio is decreased, thereby improving all the properties of the hardened mortar or concrete.

According to ASTM standards, superplasticizers must be capable of reducing mixing water by at least 12% for the same fluidity, whereas plasticizers are capable of reducing mixing water by at least 5%. These additives may be added to the mixing water when the fresh concrete or mortar mix is produced, or may be added to the cement during its production, so that they are present in dry form in the dry cement.

Our published PCT Patent Application No. WO 87/02978 discloses that the fluidifying or water-reduction effect of plasticizers and superplasticizers is increased when the cement has been subject to humidification before mixing, and claims a process for the production of a cementitious mix comprising the step of mixing together a hydraulic binder, aggregate and water in the presence of at least one additive selected from plasticizers and superplasticizers, characterised in that the hydraulic binder is treated with water before the mixing step, so that it retains from 0.1 to 10% by weight of water.

Preferred cementitious mixes are mortars and concretes. The hydraulic binder may be Portland cement, alumina cement or blended cement, for example pozzolanic cement, slag cement or other types, Portland cement being preferred. A further preferred binder is a pozzolanic cement formed by grinding clinker and calcium sulphate together with bottom ash from coal-fired power stations. Preferably the bottom ash, which is quenched in water, and normally has a water content of about 20-30% wt., is dried to a water content of less than 12%, more preferably 4-7% wt., before grinding. Preferably the bottom ash contains more than 1% wt. of unburned carbon, and less than 1% wt. of sulphates.

Suitable plasticizers include products based upon gluconates, lignosulphonates and hydroxylated polymers, while suitable superplasticizers include condensation products based upon naphthalene sulphonate or melamine sulphonate and formaldehyde, polystyrene sulphonates and hydroxyacrylates. Preferably, the mix contains at least one superplasticizer, more preferably a condensate based on beta-naphthalene sulphonate, particularly in calcium salt form.

Further admixtures such as are conventional in cement technology, for example, set accelerators or retarders, air-entraining agents, frost protection agents, pigments, etc. may also be present in the cementitious mixes produced according to the invention of WO 87/02978.

The fluidifying agent (plasticizer or superplasticizer) may be added to the mix with the mixing water, or may be present in the humidified cement before mixing. The invention of WO 87/02978 further provides a hydraulic binder containing at least one additive selected from plasticizers and superplasticizers, and containing from 0.1 to 10% weight of absorbed water. Preferably the quantity of fluidifying agent present in the cement is from 0.1 to 1%, more preferably 0.2 to 0.5% dry weight based on the weight of the cement.

Such a binder may be humidified before the addition of the fluidifying agent, or a binder already containing fluidifying agent may be subject to humidification. Alternatively, the binder may be humidified with an aqueous solution of the fluidifying agent so that humidification and addition of fluidifying agent are simultaneous.

Humidification of the hydraulic binder or cement is carried out by subjecting the cement, preferably after the grinding step, to water in liquid, aerosol or vapour form so that the water is homogeneously absorbed in an amount from 0.1 to 10% of the weight of the cement, preferably 0.5 to 5% by weight, more preferably 0.5-2% by weight. These weight percentages represent the weight of water adsorbed, not the weight applied. Preferably water is added in the form of a fine liquid spray to cement either immediately after the grinding process or after a certain period of time.

It is known that dry cement containing fluidifying agents may be obtained by spraying the cement during the grinding phase with an aqueous solution of the agent, as described for example in US Patents 2 141 571 and 3 856 542. However, as described in these patents, the cement is at a temperature at which the water is rapidly evaporated, leaving the dry fluidifying agent deposited on the cement particles, but not adding to the water content of the finished product.

It is possible to carry out the process of WO 87/02978 by adding water during the grinding process in an amount or at a temperature such that some water remains in the finished product, but because of the difficulty of controlling the amount of water adsorbed, it is preferred to humidify the cement after grinding.

The optimum amount of water present will vary with the Chemical composition and the fineness of the cement, finely ground cement generally requiring rather more water than coarsely ground.

The water is principally absorbed in the form of the hydrated minerals ettringite ($3\ CaO \cdot Al_2O_3 \cdot 3\ CaSO_4 \cdot 31\ H_2O$) and/or monosulphate ($3\ CaO \cdot Al_2O_3 \cdot CaSO_4 \cdot 16\ H_2O$) on the surface of the cement particles, in such amounts that they can be detected by differential scanning calorimetry (DSC), differential thermogravimetry (DTG) or differential thermal analysis (DTA) techniques.

A cementitious mix prepared according to the invention of WO 87/02978 gives an excellent combination of workability of the mix and strength properties of the resulting hardened concrete or mortar, for example manufactured articles of concrete. This result is particularly surprizing since it is generally believed that water absorption by cement is undesirable and has negative effects on the strength of the resulting concrete (see for example S. Sprung "Einfluss der Mühlenatmosphäre auf das Erstarren und die Festigkeit von Zement" in Zement-Kalk-Gips 5 259-267 (1974) and W.H. Duda "Cement data-book" Bauverlag GmbH, Wiesbaden and Berlin pp 155, note).

It has now been found that the storage stability of a hydraulic binder containing at least one superplasticizer and humidified with water according to the invention of WO 87/02978 is improved by the addition of a compound which has both water reducing and set-retarding properties. Such compounds, because of their water reducing properties, fall into the category of plasticizers as defined in WO 87/02978. Plasticizers having set-retarding properties include hydroxycarboxylic acids and their salts, for example gluconates, carbohydrates, e.g. sugars such as sucrose and glucose, and lignosulphonates, of which glucose and sodium gluconate, particularly glucose, are preferred.

Accordingly the present invention provides a hydraulic binder containing at least one additive selected from superplasticizers and at least one additive selected from set-retarding plasticizers, and containing from 0.1 to 10 % by weight of water.

The preferred superplasticizers, amounts of water, types of hydraulic binder, and production processes are as given above in the description of the invention of WO 87/02978.

The preferred total quantity of fluidifying agent (superplasticizer plus set-retarding plasticizer) present in the hydraulic binder is from 0.1 to 1 %, more preferably 0.2 to 0.5 % dry weight based on the weight of the cement. The weight ratio of superplasticizer to set-retarding plasticizer is preferably from 40:1 to 5:1, more preferably about 20:1.

Preferably the hydraulic binder of the present invention is prepared by spraying ground Portland cement with an aqueous solution of a superplasticizer together with a set-retarding plasticizer. This may be carried out in a plant comprising a silo for storage of untreated cement, a balance for cement weighing; a spraying apparatus comprising a spray reservoir, pump and spray head; and a mixing container provided with a mechanical mixer, for example an axial rotor. The cement is weighed into the mixture, the reservoir charged with the calculated quantity of admixture solution, and the mixer is rotated while the solution is sprayed over the cement. The mixing and spraying process should preferably take at least 1-3 minutes in order to ensure complete mixing and reaction of the water with the surface of the cement particles. After mixing, the treated cement is pneumatically or mechanically transferred to a storage silo from which it can be delivered for mixing and trick delivery of the mix.

The concentration of fluidifying agent in the solution to be sprayed is preferably from 10% to 50% by weight, more preferably 30-40% by weight. For example, when a 33% solution is used, the quantity of solution to be sprayed will be preferably from 0.8% to 1.5% by weight of the cement, giving a water content of 0.53% to 1% and an admixture content of 0.27% to 0.5%.

If a hydraulic binder containing only a superplasticizer and humidified according to the invention of WO 87/02978 is exposed to moist air, it is found that after a relatively short time the water/cement ratio required to produce a mix with a given slump increases markedly, with a consequent decrease in the compressive strength of the resulting concrete. This effect is counteracted by the presence of the set-retarding plasticizer according to the present invention.

The following Examples, in which all parts, ratios and percentages are by weight, illustrate the invention.

## Comparative Example A

A high early strength Portland cement was sprayed with 1.40 % of a 28.5 % aqueous solution of the calcium salt of a betanaphthalene sulphonic acid/formaldehyde condensate (superplasticizer). One sample of the product was sealed in an airtight container immediately after spraying, a further sample was exposed to air at 20°C, 65 % relative humidity for 24 hours and a third sample exposed similarly for 4 days. Exposure to air was carried out by spreading the cement in a 1 cm thick layer on a table in a conditioned room.

Concretes were made from each of the three samples, with a cement content of 350 kg/m$^3$, adjusting the water content to give a final slump of 220 ± 10 mm. Compressive strength was measured after 1 day, 7 days and 28 days.

## Example 1

Comparative Example A was repeated, spraying the cement with 1.40 % of a solution containing 26.0 % of the same superplasticizer and 2.5 % of glucose, in place of 28.5 % of the superplasticizer.

Example 2

Comparative Example A was repeated, spraying the cement with 1.40 % of a solution containing 26.0 % of the same superplasticizer and 2.5 % of sodium gluconate, in place of 28.5 % of the superplasticizer.
The results are given in the Table.

Example 3

a) An admixture solution is made by adding 3.0 parts of an 80% aqueous glucose solution to 85.0 parts of a 40% aqueous solution of a beta-naphthalene sulphonic acid/formaldehyde condensate superplasticizer (BNS) and diluting with 12 parts of water. The resulting solution contains 34.0% dry weight BNS and 2.4% dry weight glucose, for a total solids content of 36.4% and a superplasticizer: set-retarding plasticizer ratio of 14.1:1.
200 kg of untreated portland cement is introduced into a mixer with an axial rotor, which is rotated at 100 rpm. 2 kg of the above solution is charged into a spray reservoir and sprayed over the mixed cement over a period of 1 minute.
The treated cement is transferred to a storage silo and has excellent properties after storage for 1 week or more.
b) Example 3 a) is repeated, using 1.5 parts of the glucose solution in place of 3.0 parts, and diluting with 13.5 parts water. The resulting admixture solution has 35.2% solids and a superplasticizer : set-retarding plasticizer ratio of 28.3:1. Use of this admixture solution on cement in the same proportions as in Example 3 a) gives the same good results.
c) Example 3 b) is repeated using 1.5 parts of solid sodium gluconate in place of the glucose solution. The resulting admixture solution contains 35.5% solids and has a super-plasticizer : set-retarding plasticizer ratio of 22.7:1.

Use of this admixture solution on cement in the same proportions as in Example 3 a) gives the same good results.

Table

| Example | % superplasticizer | other additive | exposure to air | W/C ratio | Slump (in) | Compressive Strength (MPa) at | | |
|---|---|---|---|---|---|---|---|---|
| | | | | | | 1 day | 7 days | 28 days |
| A | 0.4 | - | - | 0.40 | 8.0 | 33.5 | 63.5 | 72.5 |
| | | | 1 day | 0.58 | 8.0 | 14.0 | 31.0 | 42.0 |
| | | | 4 days | 0.59 | 8.5 | 12.5 | 30.5 | 41.0 |
| 1 | 0.365 | 0.035 % glucose | - | 0.40 | 8.5 | 32.0 | 61.5 | 72.5 |
| | | | 1 day | 0.41 | 8.5 | 30.5 | 60.0 | 69.5 |
| | | | 4 days | 0.42 | 8.5 | 27.0 | 55.0 | 67.5 |
| 2 | 0.365 | 0.035 % sodium gluconate | - | 0.40 | 8.0 | 25.5 | 58.5 | 70.0 |
| | | | 1 day | 0.44 | 8.0 | 21.0 | 49.5 | 60.5 |
| | | | 4 days | 0.45 | 8.5 | 20.0 | 48.5 | 59.5 |

EP 0 290 394 B1

## Claims

1. A hydraulic binder containing at least one additive selected from superplasticizers and at least one additive selected from set-retarding plasticizers, and containing from 0.1 to 10 % by weight of water.

2. A hydraulic binder according to Claim 1 containing from 0.5 to 5 % by weight of water.

3. A hydraulic binder according to Claim 2 containing from 0.5 to 2 % by weight of water.

4. A hydraulic binder containing at least one additive selected from superplasticizers and at least one additive selected from set-retarding plasticizers, and displaying peaks on a differential scanning calorimetry scan corresponding to ettringite and monosulphate.

5. A hydraulic binder according to any one of the preceding claims based upon Portland cement.

6. A hydraulic binder according to any one of the preceding claims in which the superplasticizer is based on the formaldehyde condensate of a sulphonated aromatic compound.

7. A hydraulic binder according to Claim 6 in which the superplasticizer is the calcium salt of a formaldehyde condensate of beta-naphthalene sulphonic acid.

8. A hydraulic binder according to any one of the preceding claims in which the set-retarding plasticizer is selected from hydroxycarboxylic acids and their salts, carbohydrates and lignosulphonates.

9. A hydraulic binder according to Claim 8 in which the set-retarding plasticizer is glucose or sodium gluconate.

10. A hydraulic binder according to any one of the preceding claims in which the weight ratio of superplasticizer to set-retarding plasticizer is from 40:1 to 5:1.

11. A process for the preparation of a hydraulic binder according to any one of the preceding claims comprising the step of spraying the ground hydraulic binder with an aqueous solution of a superplasticizer together with a set-retarding plasticizer.

12. A process for improving the storage stability of a hydraulic binder containing a superplasticizer and from 0.1 % to 10 % of water comprising the addition of a set-retarding plasticizer.

## Revendications

1. Un liant hydraulique contenant au moins un additif choisi parmi les superplastifiants et au moins un additif choisi parmi les plastifiants retardateurs de prise, et contenant de 0,1 à 10% en poids d'eau.

2. Un liant hydraulique selon la revendication 1, contenant de 0,5 à 5% en poids d'eau.

3. Un liant hydraulique selon la revendication 2, contenant de 0,5 à 2% en poids d'eau.

4. Un liant hydraulique contenant au moins un additif choisi parmi les snperplastifiants et au moins un additif choisi parmi les plastifiants retardateurs de prise, et présentant des pics sur un thermogramme de calorimétrie à balayage différentiel, correspondant à l'ettringite et au monosulfate.

5. Un liant hydraulique selon 1, une quelconque des revendications précédentes, à base de ciment Portland.

6. Un liant hydraulique selon l'une quelconque des revendications précédentes, dans lequel le superplastifiant est à base du produit de condensation du formaldéhyde avec un composé aromatique sulfoné.

7. Un liant hydraulique selon la revendication 6, dans lequel le superplastifiant est le sel de calcium d'un produit de condensation du formaldéhyde avec l'acide β-naphtalènesulfonique.

8. Un liant hydraulique selon 1, une quelconque des revendications précédentes, dans lequel le plastifiant retardateur de prise est choisi parmi les acides hydroxycarboxyliques et leurs sels, les hydrates de carbone et les lignosulfonates.

9. Un liant hydraulique selon la revendication 8, dans lequel le plastifiant retardateur de prise est le glucose ou le gluconate de sodium.

10. Un liant hydraulique selon l'une quelconque des revendications précédentes, dans lequel le rapport pondéral du superplastifiant au plastifiant retardateur de prise est de 40:1 à 5:2.

11. Un procédé de préparation d'un liant hydraulique selon l'une quelconque des revendications précédentes, comprenant la pulvérisation du liant hydraulique broyé avec une solution aqueuse d'un superplastifiant ensemble avec un plastifiant retardateur de prise.

12. Un procédé pour améliorer la stabilité au stockage d'un liant hydraulique contenant un superplastifiant et de 0,1% à 10% d'eau, comprenant 1, addition d'un plastifiant retardateur de prise.

## Patentansprüche

1. Ein hydraulisches Bindemittel, enthaltend mindestens ein Zusatzmittel aus der Gruppe der Superverflüssiger und mindestens ein Zusatzmittel aus der Gruppe der Verflüssiger mit erstarrungsverzögernden Eigenschaften sowie von 0,1 bis 10 Gewichtsprozent Wasser.

2. Ein hydraulisches Bindemittel gemäss Anspruch 1, enthaltend von 0,5 bis 5 Gewichtsprozent Wasser.

3. Ein hydraulisches Bindemittel gemäss Anspruch 2, enthaltend von 0,5 bis 2 Gewichtsprozent Wasser.

4. Ein hydraulisches Bindemittel, enthaltend mindestens ein Zusatzmittel aus der Gruppe der Superverflüssiger und mindestens ein Zusatzmittel aus der Gruppe der Verflüssiger mit erstarrungsverzögernden Eigenschaften, das in einer "differential scanning colorimetry"-Kurve Scheitelpunkte aufweist, die Ettringit und Monosulfat entsprechen.

5. Ein hydraulisches Bindemittel gemäss einem der vorhergehenden Ansprüche auf Basis von Portland-Zement.

6. Ein hydraulisches Bindemittel gemäss einem der vorhergehenden Ansprüche, in welchem der Superverflüssiger ein Formaldehyd-Kondensat einer sulfonierten aromatischen Verbindung ist.

7. Ein hydraulisches Bindemittel gemäss Anspruch 6, worin der Superverflüssiger das Calciumsalz eines Formaldehyd-Kondensat von β-Naphthalinsulfonsäure ist.

8. Ein hydraulisches Bindemittel gemäss einem der vorhergehenden Ansprüche, worin der Verflüssiger mit erstarrungsverzögernden Eigenschaften aus der Gruppe von Hydroxycarbonsäuren und deren Salzen, Kohlehydraten und Ligninsulfonaten gewählt wird.

9. Ein hydraulisches Bindemittel gemäss Anspruch 8, worin der Verflüssiger mit erstarrungsverzögernden Eigenschaften Glukose oder Natriumglukonat ist.

10. Ein hydraulisches Bindemittel gemäss einem der vorhergehenden Ansprüche, worin das Gewichtsverhältnis des Superverflüssigers zum Verflüssiger mit erstarrungsverzögernden Eigenschaften von 40:1 bis 5:1 beträgt.

11. Ein Verfahren zur Herstellung eines hydraulischen Bindemittels gemäss einem der vorhergehenden Ansprüche, gekennzeichnet durch die Stufe, worin das gemahlene Bindemittel mit einer wässrigen Lösung eines Superverflüssigers und eines Verflüssigers mit erstarrungsverzögernden Eigenschaften besprüht wird.

12. Ein Verfahren zur Verbesserung der Lagerbeständigkeit eines hydraulischen Bindemittels, enthaltend einen Superverflüssiger und von 0,1 bis 10% Wasser, gekennzeichnet durch den Zusatz eines Verflüssigers mit erstarrungsverzögernden Eigenschaften.